Europäisches Patentamt

European Patent Office

Office européen des brevets

(19)

(11) Publication number: **0 082 205**
**B1**

(12) **EUROPEAN PATENT SPECIFICATION**

(45) Date of publication of patent specification: **25.01.89**

(51) Int. Cl.⁴: **H 04 N 5/60**

(21) Application number: **82901854.8**

(22) Date of filing: **16.06.82**

(86) International application number:
**PCT/JP82/00231**

(87) International publication number:
**WO 82/04517 23.12.82 Gazette 82/30**

(54) TELEVISION VOICE MULTIPLEX SIGNAL REPRODUCING CIRCUIT.

(30) Priority: **19.06.81 JP 91039/81 u**

(43) Date of publication of application:
**29.06.83 Bulletin 83/26**

(45) Publication of the grant of the patent:
**25.01.89 Bulletin 89/04**

(84) Designated Contracting States:
**CH DE GB LI NL SE**

(56) References cited:
**JP-A-55 151 873**
**JP-A-55 151 874**
**JP-U-57 072 670**

**Rundfunktechnische Mitteilungen, vol. 23,**
**1979, no. 1, pages 10-13**

(73) Proprietor: **SANYO ELECTRIC CO., LTD.**
**18, 2 chome, Keihan-Hondori**
**Moriguchi-shi Osaka 570 (JP)**

(72) Inventor: **NISHIMURA, Itsuro**
**6-34, Hiyoshidai 5-bancho Takatsuki-shi**
**Osaka 569 (JP)**
Inventor: **TANMATSU, Katsuo**
**2-80-20, Myoken-higashi Katano-shi**
**Osaka 567 (JP)**

(74) Representative: **Glawe, Delfs, Moll & Partner**
**Patentanwälte**
**Postfach 26 01 62 Liebherrstrasse 20**
**D-8000 München 26 (DE)**

## Description

### Field of art

The present invention relates to a television sound multiplex signals reproducing circuit which reproduces right and left signals, R and L, respectively, upon receiving television sound multiplex signals of the type in which the sum signal R+L of the right signal R and the left signal L is subjected to an FM modulation by sound carrier of main channel and the aforementioned right signal is subjected to an FM modulation by sound carrier of auxiliary channel, and more particularly, pertains to a television sound multiplex signals reproducing circuit in which the effect of buzz interference is lessened.

### Background of art

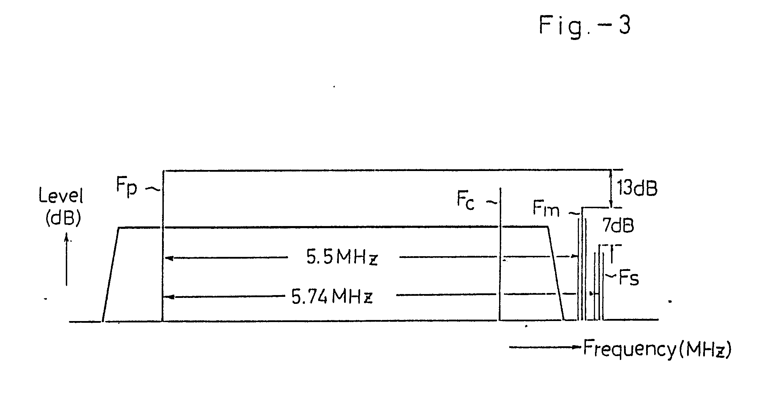

According to West Germany's television sound multiplex system, signals are composed in such a way that, as shown in Fig. 3, they are transmitted after main channel's sound signal has been subjected to an FM modulation by first sound carrier FM having a frequency higher than video carrier frequency Fp by approx. 5.5 MHz and auxiliary channel's sound signal by second sound carrier Fs having a frequency higher than the aforementioned video carrier frequency Fp by approx. 5.74 MHz, respectively. The carrier transmissions are performed with the modulated main channel's signal at a higher level than the modulated auxiliary channel's signal by the order of 7dB. Especially when transmitting the right signal R and the left signal L which compose the stereo sound, the sum signal R+L of these two signals R and L is transmitted as the aforementioned main channel's sound signal and the right signal R as the auxiliary channel's sound signal. In Fig. 3, representation of control signal is omitted and Fc stands for color subcarrier.

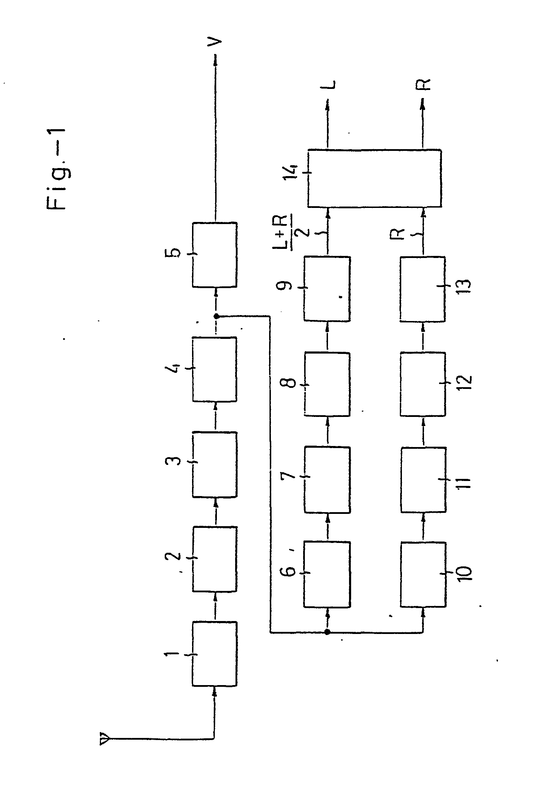

Such a television sound multiplex signals reproducing circuit for receiving and reproducing television sound multiplex signals has hitherto been composed as shown in Fig. 1. Thus in Fig. 1, 1 denotes a tuner for receiving the aforementioned television sound multiplex signals (Fig. 3) and converting them into intermediary frequency (hereinafter abbreviated to IF) signals. The output from this tuner, that is, IF signals, are entered into a video IF amplifier circuit 3 through an IF filter 2. The output of this video IF amplifier circuit is entered into the next video detector circuit 4. This video detector circuit 4 conducts the so-called video detection and the video signals obtained by this detection are amplified by video amplifier circuit 5, to be delivered to a video driving circuit not shown in this figure as video output signal V.

As the aforementioned video detector circuit 4, the so-called intercarrier detection is performed simultaneously, in which the main channel's intercarrier signal and the auxiliary channel's intercarrier signal resulting from beat between the respective sound IF signals of the main and auxiliary channels and the video carrier signal in the video IF signal are obtained from the aforementioned video detector circuit 4. The aforementioned main channel's intercarrier signal has a central frequency at 5.5 MHz with maximum frequency deviation ±30 KHz and the aforementioned auxiliary channel's intercarrier signal has a central frequency at 5.74 MHz with maximum deviation ±30 KHz.

As hereabove-described, from the aforementioned video detector circuit 4, the main channel's and the auxiliary channel's intercarrier signals are together delivered and these two types of intercarrier signals are separated in the following manner. Thus at a first band pass filter 6, the main channel's intercarrier signal is extracted from the output signal from the aforementioned video detector circuit 4. This signal, after being amplified in the next intercarrier amplifier circuit 7, is subjected to an FM detection by main channel's sound detector circuit 8 and the main channel's sound signal obtained thereby is delivered after being amplified by sound amplifier circuit 9. Similarly, at a second band pass filter 10, the auxiliary channel's intercarrier signal is extracted from the output signal from the aforementioned video detector circuit 4. This intercarrier signal, after being amplified in the intercarrier amplifier circuit 11, is subjected to an FM detection in auxiliary channel's sound detector circuit 12 and the auxiliary channel's sound signal obtained thereby is delivered after being amplified by sound amplifier circuit 13.

If the main channel's sound signal and the auxiliary channel's sound signal delivered respectively from the aforementioned sound amplifier circuits 9 and 13 correspond to the so-called dual sound such as mutually different two languages, etc., one or both of the main channel's sound signal and the auxiliary channel's sound signal is or are led to right and/or left speaker(s) not shown in this figure. However, when the aforementioned main channel's sound signal is the aforementioned stereo sum signal

$$\frac{R+L}{2}$$

and the auxiliary channel's sound signal is the right signal R, these two signals

$$\frac{R+L}{2}$$

and R are entered into the next matrix circuit 14. This matrix circuit 14, on one hand, directly delivers the introduced right signal R and, on the other, amplifies the introduced sum signal

$$\frac{R+L}{2}$$

to a signal twice as amplitude, and the aforementioned right signal R is, then, subtracted from this double sum signal R+L. As a result, from this matrix circuit 14, the aforementioned right signal R and left signal L are delivered and the respective right and left signals R and L are individually led to the aforementioned right and left speakers.

Now, one method to evaluate such a television sound multiplex signals reproducing circuit is to study the effect of buzz interference. The buzz interference is, as well known, a phenomenon of change of frequency or phase of the video carrier signal which has occurred under whatever influence appearing as a noise in the sound signal, detected by sound detector circuit. This buzz interference poses especially a grave problem for receiving stereo broadcasting, where balancing of right and left sound is required. In the following, the circuit of Fig. 1 is discussed with regard to this problem when receiving stereo broadcasting.

Now, the buzz component appearing in the output signal from the sound amplifier circuit 9 is assumed to be $\pm B_1$ and the buzz component appearing in the output signal from the sound amplifier circuit 13 is $\pm B_2$, the main channel's sound signal entered into the matrix circuit 14 is represented by

$$\frac{L+R}{2} \pm B_1$$

and the auxiliary channel's sound signal $R \pm B_2$. Accordingly, the left channel signal obtained by passing these two signals through the matrix circuit as hereabove described is indicated by $L \pm 2B_1 \mp B_2$. Since the respective intercarrier signals of the main channel and the auxiliary channel are derived on the basis of the same video carrier signal, the amplitude levels of the buzz components $\pm B_1$ and $\pm B_2$ of the respective main and auxiliary channels may be considered nearly equal. Assumed the phases of the buzz components are in agreement, the subsequent left and right signals will have the same noise level, as it is explained in detail in "Rundfunktechnische Mitteilungen", Vol. 23, 1979, No. 1, pages 10—13. However, the phases of these buzz components are not necessarily in agreement. Accordingly, in the worst occasion, buzzes nearly equal in amplitude level ($B_1 = B_2 = B$), but mutually opposite in phase may develop, the right channel signal being $R \pm B$ and the left channel signal $L \pm 3B$. Then the buzz in the left channel is distinguishably louder, as compared with that in the right channel, disrupting the right and left balance of stereo sound.

Thus this invention has been intended to solve the hereabove described problem in the conventional television sound multiplex signals reproducing circuit as shown in Fig. 1 and its object is to provide a television sound multiplex signals reproducing circuit which, when receiving stereo broadcasting, enables the buzz in the left channel signal to be lessened to nearly the same level as the buzz in the right channel signal, thereby to improve the right and left balancing degree of stereo sound.

Disclosure of the invention

In the television sound multiplex signals reproducing circuit of this invention, the output from the tuner for receiving television sound multiplex signals of the type described hereabove is fed to a first IF filter and a second IF filter. The first IF filter extracts from the aforementioned tuner output sound IF signal and video IF signal containing video carrier signal. And from the extracted sound IF signal and the video carrier signal, respective intercarrier signals of main channel and auxiliary channel are generated and from these two signals, auxiliary channel's intercarrier signal is separated and subjected to FM detection. As a result, auxiliary channel's sound signal, that is, the right signal R when receiving stereo broadcasting, is reproduced. At this time, the aforementioned detection is performed of the intercarrier signal, so the reproduced right signal generally contains some buzz component $\pm B$.

On the other hand, through the aforementioned second IF filter, the main channel's sound IF signal and the auxiliary channel's sound IF signal are together extracted from the aforementioned tuner output and the two types of extracted sound IF signals are fed to limiter circuit. At this time, by taking advantage of the fact that the aforementioned main channel's sound IF signal is at a higher level than the auxiliary channel's sound IF signal, the main channel's sound IF signal is separated in the aforementioned limiter circuit, thereby to subject this main channel's sound signal to FM detection. As a result, main channel's sound signal, that is, the sum signal

$$\frac{R+L}{2}$$

when receiving stereo broadcasting, is reproduced. At this time, the aforementioned detection is carried out directly of the sound IF signal, so the reproduced sum signal

$$\frac{R+L}{2}$$

basically does not contain any buzz component.

Accordingly, as the reproduced right signal $R \pm B$ containing some buzz component and the sum signal

$$\frac{L+R}{2}$$

containing no buzz component are passed through the matrix circuit as hereabove described, the left signal produced thereby is given by $L \mp B$. For this reason, the buzz component in the left channel is reduced, as compared with the conventional circuit and moreover, the amplitude level of the buzz components in the respective right and left channels are nearly equal, the right and left balancing degree of stereo sound is, therefore, improved.

Brief description of the drawings

Fig. 1 is a block diagram showing a conventional television sound multiplex signals reproducing circuit;

Fig. 2 is a block diagram showing an embodiment of the television sound multiplex signals reproducing circuit of this invention; and

Fig. 3 is a graph showing the composition of television sound multiplex signals.

The most preferable form for applying this invention

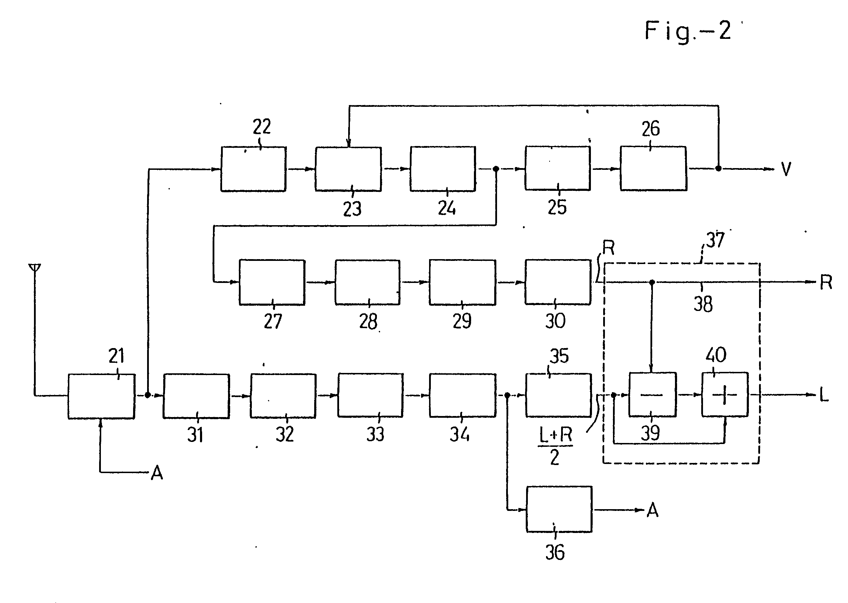

Referring to Fig. 2 showing an embodiment of the television sound multiplex signals reproducing circuit of ths invention, 21 denotes a tuner similar to that of the conventional circuit of Fig. 1. On one hand, the output from this tuner is entered into a first IF filter 22. This first IF filter permits video IF signal containing video carrier signal in the output from the aforementioned tuner 21 to pass therethrough without attenuation, while letting respective sound IF signals of main channel and auxiliary channel pass therethrough with some attenuations. The respective signals abovementioned which have passed this first IF filter 22 are amplified by video IF amplifier circuit 23 and entered into video detector circuit 24.

In the aforementioned video detector circuit 24, the detection of the video IF signal in the output from the aforementioned video IF amplifier circuit 23 is performed and the video signal obtained thereby is entered into video amplifier circuit 26 through sound trap circuit 25, to be amplified, and the output video signal V is led to video driving circuit not shown in this figure. Besides, the video signal from the aforementioned video amplifier circuit 26 is separately impressed on the aforementioned video IF amplifier circuit 23 as a signal for automatic gain control (AGC).

The aforementioned video detector circuit 24 obtains the respective sound IF signals of the main channel and the auxiliary channel in the output from the aforementioned video IF amplifier circuit 23 and the video carrier signal in the video IF signal to perform the intercarrier detection, then, the output from the aforementioned video detector circuit 24 containing the main channel's intercarrier signal (central frequency, 5.5 MHz) and the auxiliary channel's intercarrier signal (central frequency, 5.74 MHz) is entered into band pass filter 27. Since this band pass filter 27 permits pass of the intercarrier frequency band of the auxiliary channel, the auxiliary channel's intercarrier signal is extracted by this filter 27 from the output from the aforementioned video detector circuit 24. This auxilary channel's intercarrier signal, after being amplified by intercarrier amplifier circuit 28, is entered into the auxiliary channel's sound detector circuit 29, to be detected. In that way, the auxilary channel's sound signal is reproduced and this auxiliary channel's sound signal is delivered after being amplified by sound amplifier circuit 30.

The output from the aforementioned tuner 21 is entered into a second IF filter 31, on the other hand. This second IF filter 31 is substantially so designed as to permit the main channel's sound IF signal (central frequency approx. 33.4 MHz) and the auxiliary channel's sound IF signal (central frequency approx. 33.16 MHz) of the output from the aforementioned tuner 21 to pass therethrough. The aforementioned two sound IF signals which have passed this second IF filter 31 are entered into limiter circuit 32 and from this limiter circuit 32, the main channel's sound IF signal is separated and delivered. Thus since according to the television sound multiplex system being the theme of this invention, the main channel's signal is transmitted by carrier at a-level approx. 7dB higher than the auxiliary channel's signal, the main channel's sound IF signal which is at a higher level may be separated by the limiter circuit 32, as the respective sound IF signals of the main channel and the auxiliary channel are extracted from the output from the aforementioned second IF filter 31 and entered into the aforementioned limiter circuit 32 while maintaining this level relationship.

The main channel's sound IF signal separated by the aforementioned limiter circuit 32 in this way is introduced into the main channel's sound detector circuit 34 after being amplified by narrow band amplifier circuit 33. This main channel's sound detector circuit 34 is designed to operate in a sound IF band (33.4 MHz band), whereas the aforementioned auxiliary channel's sound detector circuit 29 is designed to operate in the intercarrier band (5.74 MHz band). Then the main channel's sound signal obtained by subjecting the output from the aforementioned narrow band amplifier circuit 33 to FM detection in the main channel's sound detector circuit 34 is amplified by the next sound amplifier circuit 35 and is, then delivered.

Besides, the DC voltage in the output from the aforementioned main channel's sound detector circuit 34 is extracted by automatically fine-tuned (AFT) voltage take-out circuit 36 and this DC voltage is impressed on the aforementioned tuner 21 as AFT control voltage A. Thus when the local oscillation frequency of the tuner 21 undergoes a shift for whatever reason, the central frequency (33.4 MHz) of the main channel's sound IF signal changes, then, the DC voltage level in the output from the aforementioned main channel's sound detector circuit 34 is altered thereby, so that in response to the varying DC voltage level, the local oscillation frequency of the aforementioned tuner 21 is controlled constant.

The reason why the respective sound IF signals of the main channel and the auxiliary channel are simultaneously taken out from the aforementioned tuner 21 through the aforementioned second IF filter 31 and from these two sound IF signals, the main channel's sound IF signal is separated by the aforementioned limiter circuit 32 is as follows: Since the central frequencies (33.4 MHz and 33.16 MHz) of the respective sound IF signals of the main channel and the auxiliary channel hereabove-mentioned are substantially high and are very close to each other, an IF filter of extremely narrow band is required in order to directly extract the individual sound IF signals from the output from the tuner 21. Such an IF filter is difficult to make and would be very costly, if one were produced.

The sound detection of the main channel and the auxiliary channel is respectively carried out as hereabove described, so that when receiving stereo broadcasting, the auxiliary channel's sound signal or the right signal R is delivered from the aforementioned sound amplifier circuit 30, while the main channel's sound signal or the sum signal

$$\frac{R+L}{2}$$

is delivered from the aforementioned sound amplifier circuit 35. At this time, the aforementioned right signal R, which is obtained by detection of the auxiliary channel's intercarrier signal, as hereabove described, generally contains some buzz component $\pm B$. In contrast, the aforementioned sum signal

$$\frac{R+L}{2}$$

basically contains no buzz component, being derived from direct detection of the main channel's sound IF signal, as hereabove described. Accordingly, when receiving stereo broadcasting, the output signal from the aforementioned sound amplifier circuit 30 is finally at $R\pm B$ and the output signal from the aforementioned sound amplifier circuit 35 at

$$\frac{R+L}{2}$$

These two signals are respectively introduced into the matrix circuit 37.

The aforementioned matrix circuit 37 has a line 38 for directly delivering the output signal from the aforementioned sound amplifier circuit 30, subtraction circuit 39 for subtracting the output signal from the aforementioned sound amplifier circuit 30 from the output signal from the aforementioned sound amplifier circuit 35 and addition circuit 40 for adding the output signal from the aforementioned sound amplifier circuit 35 to the output signal from this subtraction circuit 39. Accordingly, when the signal $R\pm B$ containing the buzz component and the signal

$$\frac{L+R}{2}$$

containing no buzz component are entered into this matrix circuit 37, the output signal from the subtraction circuit will be

$$\frac{L-R}{2}\mp B$$

and, therefore, the output signal from the addition circuit 40 will be $L\mp B$. At this time, the signal delivered on line 38 will be $R\pm B$. The aforementioned signals $R\pm B$ and $L\mp B$ respectively containing the buzz component B of nearly equal amplitude are fed to the respective right and left speakers not shown in this figure.

In the case of the double voice broadcasting hereabove described, the auxiliary channel's sound signal from the aforementioned sound amplifier circuit 30 and the main channel's sound signal from the aforementioned sound amplifier circuit 35 are respectively directly delivered without being passed through the matrix circuit 37, therefore, the aforementioned auxiliary channel's sound signal contains some buzz component, while the aforementioned auxiliary channel's sound signal contains some buzz component, while the aforementioned main channel's sound signal does not. In this instance, however, such a buzz component poses no trouble at all, for the aforementioned respective sound signals are individually heard.

In place of the matrix circuit 37 of the aforementioned embodiment as shown in the diagram, an assembly of an amplifier circuit of 2 amplification degrees as hereinbefore described and a subtraction circuit may be employed to achieve the equivalent effect.

## Claims

1. Television sound multiplex signals reproducing circuit for reproducing a left and right stereo signal upon reception of multiplex signals and subtracting detected signals in which a first signal is the sum of the left and right signals and FM-modulated by a sound carrier of a main channel and a second signal being one of the left and right signals is MF-modulated by a sound carrier of an auxiliary channel, said second signal is reproduced upon detection of an intercarrier signal produced by beat between the auxiliary channel sound IF signal and the video carrier signal, characterized in that the first signal is obtained directly upon detection of the main channel's sound IF signal based on the level thereof.

2. Television sound multiplex signals reproducing circuit according to claim 1 so composed that the sound IF signal for obtaining the intercarrier signal is extracted from the output from a tuner (21) through a first filter means (22), together with the video IF signal containing the video carrier signal, while the aforementioned main channel's sound IF signal is extracted from the output from the aforementioned tuner (21) through a second filter means (31), together with the auxiliary channel's sound IF signal.

3. Television sound multiplex signals reproducing circuit according to claim 2 so composed that the main channel's sound IF signal and the auxiliary channel's sound IF signal are both entered into limiter circuit (32) and by this limiter circuit (32), the aforementioned main channel's sound IF signal is separated on the basis of the level difference between the aforementioned two sound IF signals.

## Patentansprüche

1. Schaltungsanordnung zur Wiedergabe eines Fernsehsprachsignals zum Wiedergeben eines linken und rechten Stereosignals beim Empfang eines Multiplex-Signals und zum Subtrahieren detektierter Signale, in denen ein erstes Signals, nämlich die Summe aus dem linken und rechten Signal, durch einen Tonträger eines Hauptkanals frequenzmoduliert ist und in denen ein zweites Signal, nämlich das linke oder rechte Signal, durch einen Tonträger eines Hilfskanals frequenzmoduliert ist, wobei das zweite Signal unter Detektierung eines Differenzträgersignals wiedergegeben wird, das durch Überlagerung zwischen dem IF-Tonsignal des Hilfskanals und dem Bildträgersignal erzeugt wird, dadurch gekennzeichnet, daß das erste Signal direkt erhalten wird bei Detektierung des IF-Tonsignals des Hauptkanals aufgrund dessen Pegels.

2. Schaltungsanordnung zur Wiedergabe eines Multiplex-Fernsehsprachsignals gemäß Anspruch 1, so zusammengesetzt, daß das IF-Tonsignal zum Erhalten des Differenzträgersignals aus den Ausgangssignalen eines Tuners (21) durch ein erstes Filtermittel (22) zusammen mit dem das Bildträgersignal enthaltenden IF-Bildsignal herausgezogen wird, während das IF-Tonsignal des Hauptkanals aus den Ausgangssignalen des Tuners (21) durch ein zweites Filtermittel (31) zusammen mit dem IF-Tonsignal des Hilfskanals herausgezogen wird.

3. Schaltungsanordnung zur Wiedergabe eines Multiplex-Fernsehsprachsignals gemäß Anspruch 2, so zusammengesetzt, daß das IF-Tonsignal des Hauptkanals und das IF-Tonsignal des Hilfskanals beide in eine Begrenzerschaltung (32) eingegeben werden und daß durch diese Begrenzerschaltung (32) das IF-Tonsignal des Hauptkanals aufgrund der Pegeldiffernz zwischen den zwei IF-Tonsignalen abgetrennt wird.

## Revendications

1. Circuit de reproduction de signaux sonores multiplex de télévision pour reproduire un signal stéréo gauche et droite lors de la réception de signaux multiplex et soustraire des signaux détectés, dans lequel un premier signal est la somme des signaux de gauche et de droite et est modulé en fréquence par une porteuse de son d'un canal principal et un second signal qui est l'un des signaux de gauche et de droite est modulé en fréquence par une porteuse de son d'un canal auxiliaire, ledit second signal étant reproduit lors de la détection d'un signal de porteuse intermédiaire produit par interférence entre le signal sonore à fréquence intermédiaire du canal auxiliaire et le signal de porteuse vidéo, caractérisé en ce que le premier signal est obtenu directement lors de la détection du signal sonore à fréquence intermédiaire du canal principal en se basant sur le niveau de ce signal.

2. Circuit de reproduction de signaux sonores multiplex de télévision selon la revendication 1, constitué de manière que le signal sonore à fréquence intermédiaire servant à obtenir le signal de porteuse intermédiaire est extrait du signal de sortie d'un tuner (21) par l'intermédiaire d'un premier moyen à filtre (22), conjointement avec le signal vidéo à fréquence intermédiaire contenant le signal de porteuse vidéo, tandis que le signal sonore à fréquence intermédiaire du canal principal mentionné précédemment est extrait du tuner (21) mentionné précédemment par l'intermédiaire d'un second moyen à filtre (31), conjointement avec le signal sonore à fréquence intermédiaire du canal auxiliaire.

3. Circuit de reproduction de signaux sonores multiplex de télévision selon la revendication 2, constitué de manière que le signal sonore à fréquence intermédiaire du canal principal et le signal sonore à fréquence intermédiaire du canal auxiliaire soient introduits tous les deux dans un circuit limiteur (32), le signal sonore à fréquence intermédiaire du canal principal mentioné précédemment étant séparé par ce circuit limiteur, en se basant sur la différence du niveau entre les deux signaux sonores à fréquence intermédiaire mentionés précédemment.

Fig.-1

Fig.-2

EP 0 082 205 B1

Fig. - 3